# EUROPÄISCHE PATENTSCHRIFT

(11) **EP 4 079 448 B1**
(45) Veröffentlichungstag und Bekanntmachung des Hinweises auf die Patenterteilung: **13.08.2025**
(21) Anmeldenummer: 22168473.1
(22) Anmeldetag: 14.04.2022
(51) Int. Cl.: B23Q 11/08

(54) **ARBEITSKAMMER MIT BEWEGBARER ABDECKEINHEIT**
WORKING CHAMBER WITH MOVABLE COVER UNIT
CHAMBRE DE TRAVAIL POURVUE D'UNITÉ MOBILE DE RECOUVREMENT

(30) Priorität: 20.04.2021 DE 102021109906
(43) Veröffentlichungstag der Anmeldung: 26.10.2022
(73) Patentinhaber: Piller Entgrattechnik GmbH, 71254 Ditzingen (DE)
(72) Erfinder: HAAG, Rouven Sebastian, 73732 Esslingen (DE)
(74) Vertreter: Rüger Abel Patentanwälte PartGmbB

(56) Entgegenhaltungen:
- WO-A1-95/09697
- US-A- 4 882 881

## Beschreibung

Die Erfindung betrifft eine Arbeitskammer für eine Fluidbearbeitungsmaschine. Die Arbeitskammer begrenzt einen Innenraum, in dem ein Werkstück mit wenigstens einem Fluidstrahl eines Fluidwerkzeugs bearbeitet werden kann. Die Fluidbearbeitungsmaschine ist insbesondere dazu eingerichtet, ein Werkstück zu entgraten und/oder zu reinigen und/oder abzublasen. Für den jeweiligen Arbeitsvorgang werden dem Fluidwerkzeug das oder die erforderlichen Fluide unter dem notwendigen Druck zugeführt. Das Entgraten und/oder Reinigen eines Werkstücks erfolgt vorzugsweise unter Verwendung einer Flüssigkeit, beispielsweise aufweisend Wasser und/oder Kühlschmiermittel und/oder Schneidöl, während das Abblasen vorzugsweise mit einem gasförmigen Fluid, insbesondere Luft, durchgeführt wird.

Bei der Fluidbearbeitung wird Fluid ausgestoßen und kann am Werkstück abprallen. Dabei können auch Materialpartikel vom Werkstück entfernt werden und im Fluidstrahl mitbewegt werden, z.B. Schmutzpartikel und/oder Späne. Der Innenraum einer Arbeitskammer muss daher während der Bearbeitung eines Werkstücks im Wesentlichen vollständig umschlossen sein, um diesen gegen das unkontrollierte Austreten von Fluiden und Materialpartikeln zu sichern.

Diese Anforderungen an die Arbeitskammer erschweren wiederum das Bearbeiten von großen bzw. langen Werkstücken, da hierbei entsprechend große bzw. lange Relativbewegungen zwischen dem Werkstück und einem das Werkstück bearbeitenden Fluidwerkzeug erforderlich sind.

US 4 882 881 A beschreibt eine Arbeitskammer eines Strahlsystems, die über Türen zugänglich ist. An der Oberseite ist die Arbeitskammer durch eine verfahrbare Einheit abgedeckt. Die Abdeckung hat zwei flexible Abdeckteile, die über Umlenkrollen umgelenkt und über Seile miteinander verbunden sind.

WO 95/09697 A1 offenbart eine Vorrichtung zum Sprühen von Beschichtungsmaterial auf zu beschichtende Gegenstände. Ein mobiler Wagen ist an seitlichen Portalrahmen angeordnet und mit beweglichen Blenden verbunden, die einen Teil einer Fläche des Portalrahmens an der Seite der Sprühzone abdecken.

Es kann daher als Aufgabe der vorliegenden Erfindung angesehen werden, eine Arbeitskammer für eine Fluidbearbeitungsmaschine zu schaffen, bei der der Innenraum der Arbeitskammer gegenüber der Umgebung mit einfachen Mitteln umschlossen werden kann und die sich insbesondere auch für das Bearbeiten von großen oder langen Werkstücken eignet. Insbesondere soll auch ein zuverlässiger Betrieb der Arbeitskammer mit hoher Standzeit erreicht werden.

Diese Aufgabe wird durch eine Arbeitskammer mit den Merkmalen des Patentanspruches 1 gelöst.

Die Arbeitskammer ist für die Fluidbearbeitung eines Werkstücks, insbesondere eines langen Werkstücks, eingerichtet. Die Arbeitskammer kann somit Bestandteil einer Fluidbearbeitungsmaschine sein. Die Arbeitskammer hat mehrere Wände, die einen Innenraum der Arbeitskammer umschließen, beispielsweise auf fünf Seiten. Eine der Wände kann beispielsweise einen Boden bilden, an den sich eine oder mehrere Seitenwände anschließen.

Die Arbeitskammer weist eine Zugangsöffnung zum Innenraum auf. Beispielsweise kann die Zugangsöffnung innerhalb einer der Wände vorhanden sein oder durch einen Rand begrenzt sein, der durch aneinander anschließende Wände, insbesondere Seitenwände, gebildet ist. Die Zugangsöffnung kann beispielsweise gegenüberliegend zum Boden der Arbeitskammer angeordnet sein. Die Zugangsöffnung erstreckt sich in einer Zugangsebene. Vorzugsweise ist die Zugangsebene horizontal ausgerichtet. Die Zugangsebene ist durch eine Längsrichtung und eine Querrichtung aufgespannt, wobei Längsrichtung und Querrichtung rechtwinklig zueinander ausgerichtet sind. Die Zugangsöffnung ermöglicht den Zugang zum Innenraum der Arbeitskammer, so dass beispielsweise ein Werkstück in den Innenraum eingesetzt oder aus dem Innenraum entnommen werden kann.

Die Arbeitskammer hat außerdem eine Abdeckeinheit, die zum Abdecken der Zugangsöffnung zumindest während der Werkstückbearbeitung im Innenraum eingerichtet ist. Die Abdeckeinheit ist relativ zu den Wänden der Arbeitskammer bewegbar und kann beispielsweise mittels einer Führungseinrichtung der Arbeitskammer geführt bewegbar gelagert sein. Zu der Abdeckeinheit gehört ein starrer Deckel, der in einer Schließstellung die Zugangsöffnung teilweise abdeckt und in Längsrichtung bewegbar gelagert ist. Der Deckel kann in Längsrichtung insbesondere kürzer sein als die Länge der Zugangsöffnung in Längsrichtung und/oder als die Länge der Wände der Arbeitskammer, die sich in Längsrichtung erstrecken.

Zu der Abdeckeinheit gehören außerdem ein erster Abdeckteil und ein zweiter Abdeckteil. Jeder Abdeckteil ist an einem ersten Längsende mit dem Deckel verbunden und erstreckt sich ausgehend vom ersten Längsende in einer Erstreckungsrichtung bis zu einem entgegengesetzten zweiten Längsende. Die Abdeckteile können sich zwischen den Längsenden abschnittsweise geradlinig und/oder gekrümmt erstrecken, so dass die Erstreckungsrichtung entsprechend dazu abschnittsweise geradlinig und/oder gekrümmt sein kann.

Die Summe aus der Länge des Deckels und der Länge des ersten Abdeckteils in seiner Erstreckungsrichtung ist zumindest so groß wie die Länge der Zugangsöffnung in Längsrichtung. Die Summe der Länge des Deckels in Längsrichtung und der Länge des zweiten Abdeckteils in seiner Erstreckungsrichtung ist zumindest so groß wie die Länge der Zugangsöffnung in Längsrichtung. Dadurch ist sichergestellt, dass der Deckel in Längsrichtung entlang der Zugangsöffnung bewegt werden kann, wobei die Zugangsöffnung jeweils durch den Deckel und zumindest eines der beiden Abdeckteile abgedeckt werden kann.

Jedes Abdeckteil ist zum Beispiel ein flächiges Element, das sich vorzugsweise immer parallel zur Querrichtung und dabei gleichzeitig in Längsrichtung oder schräg oder rechtwinklig zur Längsrichtung erstrecken kann. Die Abdeckteile sind relativ zur Längsrichtung flexibel und/oder umlenkbar. Sie können aus ihrer Erstreckung in Längsrichtung schräg oder rechtwinklig zur Längsrichtung gebogen bzw. umgelenkt werden. Vorzugsweise bleibt die Dimension jedes Abdeckteils in Erstreckungsrichtung während des Betriebs konstant und verlängert bzw. verkürzt sich nicht. In Querrichtung kann jedes Abdeckteil gegenüber den im fehlerfreien Normalbetrieb der Arbeitskammer auftretenden Kräften vorzugsweise starr und/oder biegesteif ausgebildet sein.

Jedes Abdeckteil kann beispielsweise aus einer Vielzahl von gelenkig miteinander verbundenen Lamellen gebildet sein, die sich jeweils in Querrichtung erstrecken. Die Lamellen sind bei dem im fehlerfreien Normalbetrieb der Arbeitskammer auftretenden Kräften in Querrichtung und/oder in Längsrichtung insbesondere starr und/oder biegesteif. Alternativ könnte jedes Abdeckteil auch als Folienbahn ausgeführt sein, die in Querrichtung ausgesteift ist, beispielsweise durch eine Mehrzahl von sich in Querrichtung erstreckenden Stäben.

Bei einer Ausführungsform der Abdeckteile können die sich in Querrichtung erstreckenden Stäbe oder Lamellen mittels Filmscharnieren verbunden sein, wobei zwischen jeweils zwei unmittelbar benachbarten Stäben oder Lamellen ein Filmscharnier ausgebildet ist. Die Scharniere zwischen Stäben oder Lamellen können auch auf jede andere bekannte Weise gebildet sein. Die Scharnierachsen der Scharniere sind vorzugsweise stets parallel zueinander in Querrichtung ausgerichtet.

Die Arbeitskammer hat außerdem eine erste Umlenkeinheit für das Umlenken des ersten Abdeckteils und eine zweite Umlenkeinheit für das Umlenken des zweiten Abdeckteils. Mittels der Umlenkeinheiten wird das betreffende Abdeckteil aus der Zugangsebene der Zugangsöffnung herausgeführt. Beim Umlenken der Abdeckteile werden diese durch die jeweilige Umlenkeinheit nicht aufgerollt. Durch das Umlenken der Abdeckteile werden in Erstreckungsrichtung aneinander anschließende Abschnitte eines jeweiligen Abdeckteils nicht unmittelbar aufeinander abgelegt, wie dies beim Aufrollen der Fall wäre. Beispielsweise kann jedes Abdeckteil durch die zugeordnete Umlenkeinheit um einen Winkel von 70° bis 110° umgelenkt werden. Der Winkel, um den das jeweilige Abdeckteil umgelenkt wird, kann variieren. Bevorzugt beträgt der Umlenkwinkel in etwa 90°.

An den umlenkbaren Abdeckteilen können sich bei der Werkstückbearbeitung auf der dem Innenraum zugewandten Seite Verschmutzungen ablagern, z.B. feste Schmutzpartikel, wie z.B. Späne und/oder Öl und/oder Kühlschmiermittel, usw. Bei einem Aufrollen der Abdeckteile könnte der zuverlässige Betrieb der Abdeckeinheit und mithin der Arbeitskammer beeinträchtigt werden. Es ist daher erfindungsgemäß vorgesehen, die Abdeckteile nicht aufzurollen, sondern lediglich umzulenken.

Bei einer vorteilhaften Ausführungsform kann der Deckel zusätzlich auch in Querrichtung bewegbar sein. Bei dieser Ausführung können ein drittes Abdeckteil und ein viertes auf entgegengesetzten Seiten mit dem Deckel verbunden sein. das dritte und das vierte Abdeckteil können analog zum ersten und zweiten Abdeckteil ausgestaltet und/oder angeordnet und/oder geführt sein. Es wird sozusagen eine Gesamtanordnung aus Deckel und den vier Abdeckteilen geschaffen, die ähnlich ist wie ein Kreuzschlitten. Auf diese Weise kann auch ein größerer Bewegungsweg für den Deckel in Querrichtung realisiert werden.

Es ist vorteilhaft, wenn der Deckel einen Rahmenteil aufweist, entlang der wenigstens ein Deckelteil zwischen einer Schließstellung und einer Offenstellung bewegbar ist. In der Schließstellung deckt der Deckel bzw. das wenigstens eine Deckelteil die Zugangsöffnung in dem Bereich ab, in dem er sich in Längsrichtung erstreckt. In der Offenstellung gibt der Deckel die Zugangsöffnung zwischen den beiden Abdeckteilen zumindest teilweise frei. In der Offenstellung kann beispielsweise ein Werkstück in den Innenraum eingesetzt oder aus dem Innenraum entnommen werden. Die Bewegung zwischen der Schließstellung und der Offenstellung kann beliebig ausgeführt werden. Bei dem hier beschriebenen Ausführungsbeispiel kann es sich um eine lineare Bewegung in Querrichtung handeln.

Der Deckel kann mehrteilig, beispielsweise zweiteilig ausgebildet sein. Die beiden Deckelteile können sich beispielsweise verschieden voneinander bewegen, insbesondere entgegengesetzt zueinander, wenn der Deckel zwischen der Schließstellung und der Offenstellung bewegt wird.

In dem Deckel bzw. dem wenigstens einen Deckelteil kann wenigstens eine Eingriffsöffnung vorhanden sein, beispielsweise um einen Werkstückhaltearm durch den Deckel hindurchzuführen und das Werkstück während der Bearbeitung im Innenraum der Arbeitskammer zu halten. Der Werkstückhaltearm kann in der Bearbeitungsstellung des Werkstücks somit durch die Eingriffsöffnung des Deckels hindurchgreifen. Der wenigstens eine Werkstückhaltearm kann auch eine Bewegungskopplung mit dem Deckel herstellen, zumindest in Längsrichtung, so dass sich Werkstückhaltearm und Deckel während der Bearbeitung des Werkstücks in Längsrichtung gemeinsam bewegen können. Die Eingriffsöffnung und/oder eine am Deckel vorhandene Kopplungseinrichtung kann zum Koppeln des Werkstückhaltearms zumindest für eine gemeinsame Bewegung in Längsrichtung eingerichtet sein.

Das erste Abdeckteil und das zweite Abdeckteil sind mittels wenigstens eines flexiblen Verbindungselements an ihren dem Deckel entgegengesetzten zweiten Längsenden mittelbar oder unmittelbar miteinander verbunden. Als flexibles Verbindungselement kann beispielsweise ein Seil, eine Kette, ein Riemen, ein Band oder ähnliches dienen. Das wenigstens eine Verbindungselement ist zumindest parallel zu einer rechtwinklig zur Querrichtung ausgerichteten Ebene umlenkbar bzw. flexibel biegbar.

Die Arbeitskammer weist außerdem eine Spanneinrichtung auf. Die Spanneinrichtung ist dazu eingerichtet, eine Zugkraft auf die Abdeckteile auszuüben. Die Zugkraft ist derart ausgerichtet, dass sie die beiden Abdeckteile jeweils in einer Richtung vom Deckel weg beaufschlagt. Die Abdeckteile werden in ihrer Erstreckung zwischen dem Deckel und der Spanneinrichtung unter einer Zugspannung gehalten. Dadurch kann die Führung und das Umlenken der Abdeckteile sowie die Relativbewegung der Abdeckteile zu den Wänden der Arbeitskammer verbessert werden. Dadurch lässt sich auch die Standzeit der Arbeitskammer erhöhen. Die Spanneinrichtung arbeitet mit dem wenigstens einen flexiblen Verbindungselements zusammen. Dazu hält die Spanneinrichtung das wenigstens eine flexible Verbindungselement unter einer Zugspannung, die dann auf die Abdeckteile übertragen wird.

Beispielsweise kann die Spanneinrichtung wenigstens eine federkraftbelastete Spannrolle aufweisen, um die das wenigstens eine flexible Verbindungselement geführt ist. Für jedes vorhandene flexible Verbindungselement kann jeweils wenigstens eine federkraftbelastete Spannrolle vorhanden sein. Die Federkraft, die die Spannrolle auf das zugeordnete Verbindungselement überträgt, ist vorzugsweise in Längsrichtung ausgerichtet oder hat zumindest eine Kraftkomponente in Längsrichtung, die größer ist als eine Kraftkomponente rechtwinkelig dazu. Zusätzlich zu der wenigstens einen federkraftbelasteten Spannrolle kann die Spanneinrichtung eine oder mehrere weitere Zusatzrollen aufweisen, um die das wenigstens eine Verbindungselement geführt ist bzw. sind.

Es ist bevorzugt, wenn die Abdeckeinheit entlang einer Führungsbahn bewegbar gelagert ist. Entlang der Führungsbahn bewegen sich der Deckel und die beiden Abdeckteile gemeinsam, insbesondere ausgelöst durch eine Bewegung des Deckels in Längsrichtung.

Die erste Umlenkeinheit kann dabei eine erste Umlenkstelle der Führungsbahn und die zweite Umlenkeinheit eine zweite Umlenkstelle der Führungsbahn bilden. Die Führungsbahn verläuft außerhalb des Innenraums und hat einen Abschnitt, der sich in der Zugangsebene entlang der Zugangsöffnung erstreckt.

Die Führungsbahn kann eine oder mehrere weitere Umlenkstellen aufweisen, an denen entweder eines der Abdeckteile oder ein die Abdeckteile verbindendes Verbindungselement umgelenkt wird. Bei einem Ausführungsbeispiel weist die Arbeitskammer eine dritte Umlenkeinheit zur Bildung einer dritten Umlenkstelle und eine vierte Umlenkeinheit zur Bildung einer vierten Umlenkstelle der Führungsbahn auf. An jeder Umlenkstelle wird eine Richtungsänderung der Führungsbahn um eine sich in Querrichtung erstreckende Achse bewirkt. Die Richtungsänderung kann ein jeder Umlenkstelle beispielsweise im Bereich von 70° bis 110° liegen und beispielsweise etwa 90° betragen.

Die Führungsbahn kann teilweise oder vollständig um den Innenraum herum führen.

Vorteilhafte Ausgestaltungen der Erfindung ergeben sich aus den abhängigen Ansprüchen, der Beschreibung und den Zeichnungen. Nachfolgend werden bevorzugte Ausführungsformen der Erfindung anhand der Zeichnungen im Einzelnen erläutert. In den Zeichnungen zeigen:
Figur 1 eine perspektivische Darstellung eines Ausführungsbeispiels einer Arbeitskammer,
Figur 2 eine schematische, blockschaltbildähnliche Darstellung eines Ausführungsbeispiels einer Arbeitskammer,
Figuren 3 und 4 jeweils eine blockschaltbildähnliche Prinzipdarstellung von Ausführungsbeispielen einer Umlenkeinheit zum Umlenken eines Abdeckteils der Arbeitskammer und
Figur 5 eine schematische Prinzipdarstellung eines Ausführungsbeispiels einer Spanneinrichtung der Arbeitskammer.

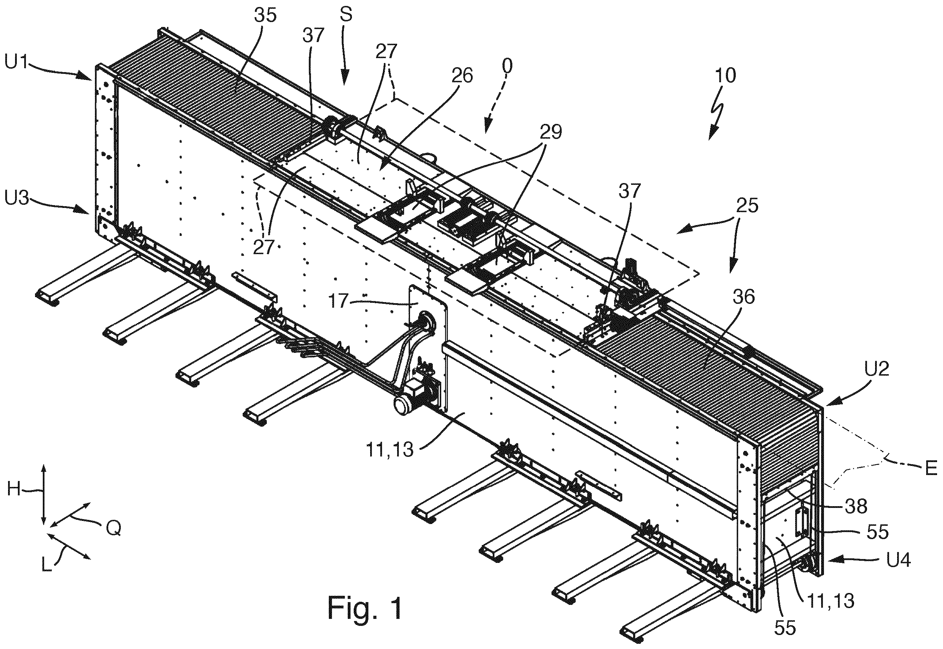

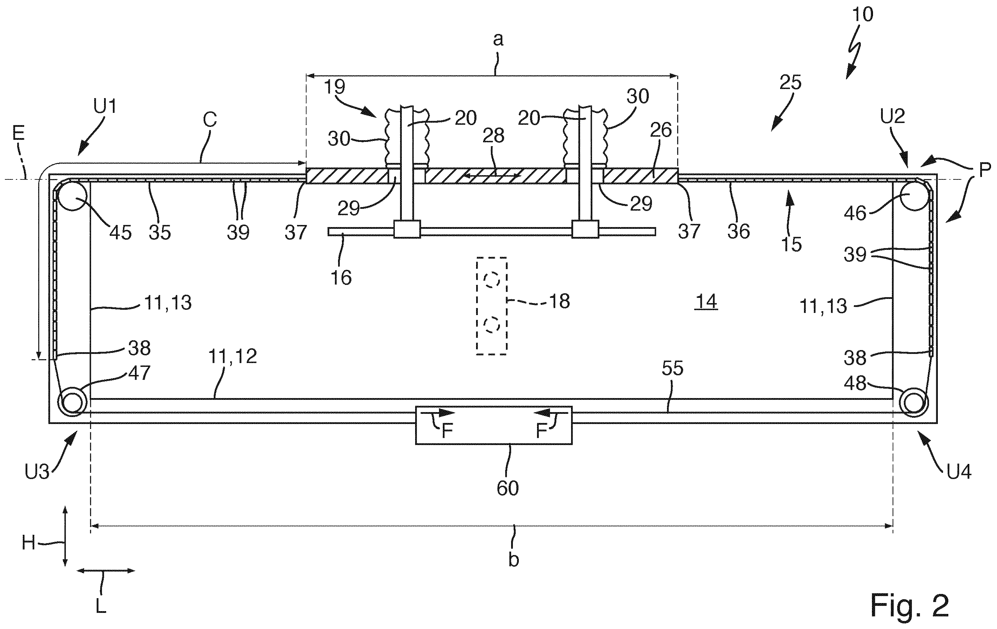

In Figur 1 ist ein Ausführungsbeispiel einer Arbeitskammer 10 in einer perspektivischen Ansicht veranschaulicht. Figur 2 zeigt eine Prinzipdarstellung der erfindungsgemäßen Arbeitskammer 10 in einer teilgeschnittenen Seitenansicht.

Die Arbeitskammer 10 hat mehrere Wände 11. Eine Wand 11 bildet beispielsgemäß einen Boden 12. An dem Boden 12 schließen sich wenigstens eine und beispielsgemäß vier Seitenwände 13 an, so dass der Boden 12 gemeinsam mit den Seitenwänden 13 einen Innenraum 14 umgibt. Zwei sich gegenüberliegende Seitenwände 13 erstrecken sich in einer Längsrichtung L und die beiden anderen, sich gegenüberliegenden Seitenwände 13 erstrecken sich in einer Querrichtung Q. An einer Seite, beispielsgemäß gegenüberliegend zum Boden 12, hat die Arbeitskammer 10 eine Zugangsöffnung 15. Die Zugangsöffnung 15 ist zumindest teilweise durch die sich in Längsrichtung L erstreckenden Seitenwände 13 begrenzt. Die Zugangsöffnung 15 kann kürzer sein als die sich in Längsrichtung L erstreckenden Seitenwände. Mittels der Zugangsöffnung 15 ist der Zugang zum Innenraum 14 möglich, beispielsweise um ein Werkstück 16 im Innenraum 14 anzuordnen oder aus dem Innenraum 14 zu entnehmen.

Die Zugangsöffnung 15 erstreckt sich in einer Zugangsebene E. Die Zugangsebene E ist parallel zur Längsrichtung L und parallel zur Querrichtung Q ausgerichtet.

Die Längsrichtung L, die Querrichtung Q und eine Hochrichtung H bilden beim Ausführungsbeispiel ein kartesisches Koordinatensystem. Die Hochrichtung H kann dabei vertikal ausgerichtet sein.

Die Arbeitskammer 10 weist in einer Wand 11 und beispielsgemäß in einer Seitenwand 13 eine Halterung 17 (Figur 1) für ein Fluidwerkzeug 18 (Figur 2) auf. Das Fluidwerkzeug 18 ist dazu eingerichtet, wenigstens einen Fluidstrahl in den Innenraum 14 hinein auf ein dort angeordnetes Werkstück 16 zu richten, um das Werkstück 16 zu bearbeiten.

Das Werkstück 16 kann abhängig von dem verwendeten Fluid, von dem Druck, mit dem das Fluid ausgestoßen wird und von der Form des gebildeten Fluidstrahls auf unterschiedliche Weise bearbeitet werden. Zum Beispiel kann das Fluidwerkzeug 18 dazu eingerichtet sein, das Werkstück 16 zu entgraten und/oder zu reinigen und/oder abzublasen. Das Fluid kann eine Flüssigkeit oder ein Gas sein. Zum Entgraten und zum Reinigen wird vorzugsweise eine Flüssigkeit verwendet. Beispielsweise kann zum Entgraten Wasser und/oder ein Kühlschmiermittel und/oder ein Schneidöl eingesetzt werden. Das Reinigen kann beispielsweise mit Wasser oder einem Gemisch aus Wasser und einem Reinigungsmittel durchgeführt werden. Zum Abblasen wird insbesondere ein gasförmiges Fluid verwendet, insbesondere Luft. Die genannten Arbeitsschritte können in Kombination oder individuell in einer Fluidbearbeitungsmaschine ausgeführt werden, wobei die Arbeitskammer 10 Bestandteil dieser Fluidbearbeitungsmaschine ist.

Beim Ausführungsbeispiel ist die Halterung 17 für das wenigstens eine Fluidwerkzeug 18 unbeweglich an der Wand 11 angeordnet. Das Fluidwerkzeug 18 wird mittels der Halterung 17 relativ zur Arbeitskammer 10 unbeweglich gelagert. Alternativ dazu kann das wenigstens eine Fluidwerkzeug 18 auch ausschließlich linear in Querrichtung Q bewegbar an der Halterung 17 gelagert sein. Beispielsgemäß wird eine Relativbewegung zwischen einem Werkstück 16 und dem Fluidwerkzeug 18 mittels einer in einem oder mehreren linearen und/oder rotatorischen Freiheitsgraden bewegbaren Werkstückhalterung 19 bewirkt.

Wie es schematisch in Figur 2 dargestellt ist, kann die Werkstückhalterung 19 einen oder mehrere Werkstückhaltearme 20 aufweisen, die beim Ausführungsbeispiel in mehreren linearen Freiheitsgraden bewegbar sind. Insbesondere in Längsrichtung L und/oder Querrichtung Q und/oder Hochrichtung H.

Die Wände 11 umschließen den Innenraum 14, um zu verhindern, dass während der Bearbeitung des Werkstücks 16 mittels des Fluidwerkzeugs 18 Fluid und/oder vom Werkstück 16 entfernte Verschmutzungen, insbesondere Partikel, den Innenraum 14 nicht unkontrolliert verlassen. Außerdem können die Wände 11 eine Geräuschdämpfung und Schwingungsdämpfung bewirken.

Um den Innenraum 14 an der Zugangsöffnung 15 zumindest während der Bearbeitung des Werkstücks 16 abzudecken, weist die Arbeitskammer 10 eine Abdeckeinheit 25 auf. Zu der Abdeckeinheit 25 gehört ein starrer Deckel 26, der beim Ausführungsbeispiel ein oder zwei separate Deckelteile 27 aufweist. In Figur 1 ist der Deckel 26 in einer Schließstellung S dargestellt. Der Deckel 26 erstreckt sich in Längsrichtung L entlang eines Abschnitts der Zugangsöffnung 15, den er in der Schließstellung S abdeckt. Gestrichelt ist in Figur 1 eine Offenstellung O des Deckels 26 veranschaulicht. Der Deckel 26 kann zwischen der Schließstellung S und der Offenstellung O bewegt werden, beispielsgemäß linear in Querrichtung Q. In der Offenstellung O gibt der Deckel 26 die darunterliegende Zugangsöffnung 15 zumindest teilweise frei. Beim Ausführungsbeispiel können die Deckelteile 27 in Querrichtung Q voneinander weg und aufeinander zu bewegt werden, beispielsweise durch eine Linearbewegung entlang eines Rahmenteils des Deckels 26 oder alternativ durch eine Schwenkbewegung. In der Offenstellung O ist somit zwischen den beiden Deckelteilen 27 ein Spalt oder Freiraum vorhanden, durch den das Werkstück 16 in den Innenraum 14 eingesetzt bzw. aus dem Innenraum 14 entnommen werden kann.

Der Deckel 26 bzw. die Deckelteile 27 sind beispielsgemäß durch starre plattenförmige Elemente gebildet. In Längsrichtung L ist der Deckel 26 und insbesondere das Rahmenteil des Deckels 26 linear verschiebbar an den beiden sich gegenüberliegenden Seitenwänden 13 gelagert, beispielsweise entlang von Führungsschienen und/oder Führungsnuten, die sich an den Seitenwänden 13 in Längsrichtung L erstrecken. Diese Führungsschienen und/oder Führungsnuten sind Bestandteil einer Führungseinrichtung 28, die in Figur 2 lediglich schematisch durch den Doppelpfeil dargestellt ist. Die Führung des Deckels 26 in Längsrichtung L an einer oder mehreren Seitenwänden 13 kann grundsätzlich auf jede bekannte Art und Weise erfolgen.

Der Deckel 26 bzw. das Rahmenteil des Deckels 26 kann in Querrichtung Q in einem begrenzten Bereich bewegbar sein.

Der Deckel 26 hat außerdem wenigstens eine Eingriffsöffnung 29 für die Werkstückhalterung 19. Beim Ausführungsbeispiel ist für jeden vorhandenen Werkstückhaltearm 20 eine zugeordnete Eingriffsöffnung 29 vorhanden. In der Schließstellung S des Deckels 26 kann der wenigstens eine Werkstückhaltearm 20 durch die zugeordnete Eingriffsöffnung 29 hindurchragen und das Werkstück 16 im Innenraum 14 halten. In dieser Stellung kann eine Bewegungskopplung des wenigstens einen Werkstückhaltearms 20 mit dem Deckel 26 in Längsrichtung L hergestellt werden, so dass der Deckel 26 bei einer Bewegung des wenigstens einen Werkstückhaltearms 20 in Längsrichtung L mitbewegt wird.

Wie es in Figur 1 zu erkennen ist, ist die Eingriffsöffnung 29 durch jeweils eine Aussparung in den Deckelteilen 27 gebildet, die in der Schließstellung S des Deckels 26 ineinander übergehen bzw. aneinandergrenzen und somit die Eingriffsöffnung 29 begrenzen. Die Aussparungen sind an der Trennstelle bzw. Anlagestelle der beiden Deckelteile 27 zueinander offen.

Befindet sich der Deckel 26 in der Schließstellung S und ragt der wenigstens eine Werkstückhaltearm 20 durch die zugeordnete Eingriffsöffnung 29 hindurch (Figur 2), können die Eingriffsöffnungen 29 erforderlichenfalls durch geeignete Abdeckungen verschlossen werden, um ein Austritt von Fluiden und/oder Partikeln aus dem Innenraum 14 durch die Eingriffsöffnungen 29 zu vermeiden, wenn das Werkstück 16 im Innenraum 14 bearbeitet wird. Verbleibende Zwischenräume zwischen der Eingriffsöffnung 29 und dem hindurchragenden Werkstückhaltearm 20 können dadurch geschlossen werden. Solche Abdeckungen können beispielsweise durch einen Faltenbalg 30 realisiert werden oder durch irgendeine andere geeignete Art der Abdeckung. Die Abdeckung ist zumindest in Hochrichtung H vorzugsweise flexibel und/oder verformbar und/oder teleskopierbar, um die Bewegung des wenigstens einen Werkstückhaltearms 20 in Hochrichtung H relativ zum Deckel 26 zu ermöglichen.

In den Figuren 1 und 2 ist außerdem zu erkennen, dass eine Länge a des Deckels 26 in Längsrichtung L kleiner ist als eine Länge b der Zugangsöffnung 15 in Längsrichtung L. Auch in der Schließstellung S kann der Deckel 26 daher die Zugangsöffnung 15 in Längsrichtung L nicht vollständig verschließen. Aus diesem Grund weist die Abdeckeinheit 25 außerdem einen ersten Abdeckteil 35 sowie einen zweiten Abdeckteil 36 auf. Die Abdeckteile 35, 36 sind in Längsrichtung L auf entgegengesetzten Seiten des Deckels 26 angeordnet und jeweils mit ihrem dem Deckel 26 benachbarten ersten Längsende 37 mit dem Deckel 26 verbunden. Die Abdeckteile 35, 36 erstrecken sich ausgehend von ihrem jeweiligen ersten Längsende 37 vom Deckel 26 weg bis zu einem zweiten Längsende 38.

In Erstreckungsrichtung zwischen dem ersten Längsende 37 und dem zweiten Längsende 38 hat der erste Abdeckteil 35 und/oder der zweite Abdeckteil 36 eine Länge c (Figur 2). Die Summe aus der Länge a des Deckels 26 und der Länge c des ersten Abdeckteils 35 und/oder des zweiten Abdeckteils 36 ist vorzugsweise mindestens so groß wie die Länge b der Zugangsöffnung 15. Dadurch ist sichergestellt, dass in jeder Position des Deckels 26 in Längsrichtung L relativ zu den Wänden 11 der Arbeitskammer 10 durch die Abdeckeinheit 25 abgedeckt ist.

In der Erstreckungsrichtung zwischen dem ersten Längsende 37 und dem zweiten Längsende 38 erstrecken sich die Abdeckteile 35, 36 abschnittsweise geradlinig und/oder gekrümmt. Sie werden jeweils zumindest einmal schräg oder rechtwinklig relativ zur Zugangsebene E umgelenkt. Zu diesem Zweck sind die Abdeckteile 35, 36 gegenüber der Längsrichtung L biegbar bzw. umlenkbar bzw. flexibel ausgebildet. Die Abdeckteile 35, 36 können sich schräg oder rechtwinklig um eine oder mehrere Achsen krümmen, die parallel zur Querrichtung Q verlaufen. In Querrichtung Q sind die Abdeckteile 35, 36 vorzugsweise starr. Bei dem hier beschriebenen Ausführungsbeispiel ist jedes der Abdeckteile 35, 36 durch eine Mehrzahl von sich in Querrichtung Q erstreckenden Lamellen 39 gebildet, wobei zwei unmittelbar benachbarte Lamellen 39 um eine sich in Querrichtung Q erstreckende Scharnier- oder Gelenkachse gelenkig miteinander verbunden sind.

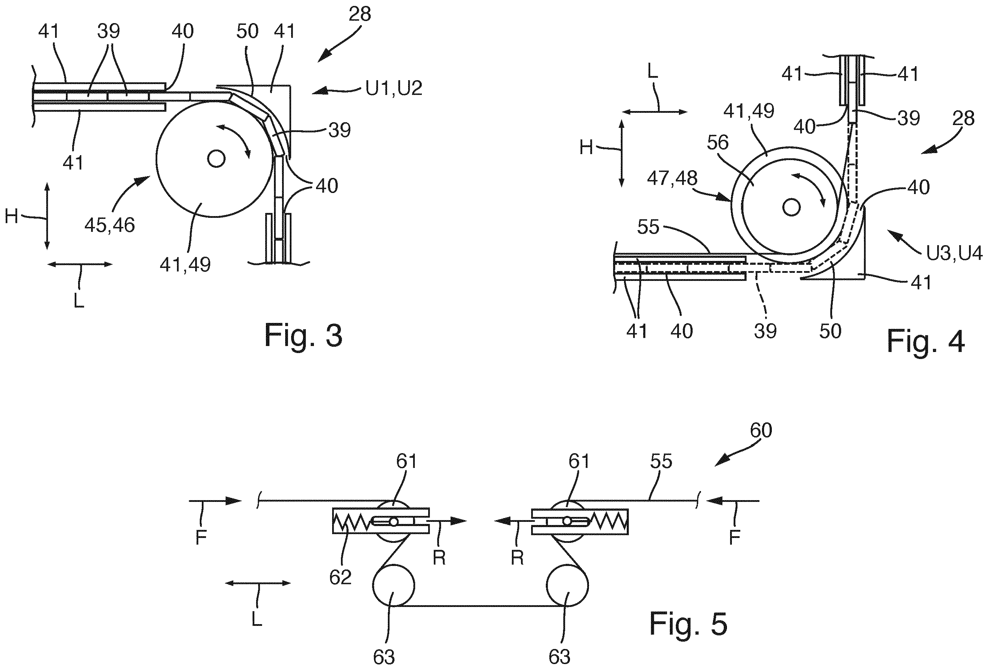

Die Abdeckeinheit 25 wird entlang einer Führungsbahn P an einer oder mehreren Wänden 11, insbesondere Seitenwänden 13 der Arbeitskammer 10 geführt. Die Führungsbahn P ist vorgegeben durch eine Führungseinrichtung 28 der Arbeitskammer 10. Die Führungseinrichtung 28 kann hierfür eine beliebige Anzahl und Art von Führungselementen aufweisen, beispielsweise wenigstens eine Führungsnut 40, die durch jeweils zwei Führungselemente 41 begrenzt werden kann. Dabei können unterschiedliche Arten von Führungselementen 41 verwendet werden (vergleiche insbesondere Figuren 3 und 4).

Die Führungsbahn P hat einen Abschnitt, der sich entlang der Zugangsöffnung 15 in der Zugangsebene E erstreckt. In Längsrichtung L auf entgegengesetzten Seiten der Zugangsöffnung 15 hat die Führungsbahn P eine erste Umlenkstelle U1, die durch eine erste Umlenkeinheit 45 gebildet ist und eine zweite Umlenkstelle U2, die durch eine zweite Umlenkeinheit 46 gebildet ist. Die erste Umlenkeinheit 45 ist dem ersten Abdeckteil 35 zugeordnet und die zweite Umlenkeinheit 46 ist dem zweiten Abdeckteil 36 zugeordnet.

Mittels der ersten Umlenkeinheit 45 kann der erste Abdeckteil 35 an der ersten Umlenkstelle U1 um eine Achse umgelenkt werden, die sich parallel zur Querrichtung Q erstreckt. Die Umlenkung des ersten Abdeckteils 35 an der ersten Umlenkstelle U1 kann in einem Bereich von etwa 70° bis 110° liegen und vorzugsweise im Wesentlichen 90° betragen. Analog hierzu kann der zweite Abdeckteil 36 mittels der zweiten Umlenkeinheit 46 um eine Achse umgelenkt werden, die sich parallel zur Querrichtung Q erstreckt. Die Umlenkung des zweiten Abdeckteils 36 an der zweiten Umlenkstelle U2 kann in einem Bereich von etwa 70° bis 110° liegen und vorzugsweise im Wesentlichen 90° betragen. Somit kann sich jeweils ein Abschnitt des ersten Abdeckteils 35 bzw. des zweiten Abdeckteils 36 im Anschluss an das betreffende erste Längsende 37 in Längsrichtung L innerhalb der Zugangsebene E erstrecken und an der ersten Umlenkstelle U1 bzw. der zweiten Umlenkstelle U2 umgelenkt werden und sich dann in etwa in Hochrichtung H von der Zugangsebene E weg entlang einer benachbarten Seitenwand 13 erstrecken, die den Innenraum 14 in Längsrichtung L begrenzt.

Beim Ausführungsbeispiel weist die Führungsbahn P außerdem eine durch eine dritte Umlenkeinheit 47 gebildete dritte Umlenkstelle U3 und eine durch eine vierte Umlenkeinheit 48 gebildete vierte Umlenkstelle U4 auf. Die dritte Umlenkstelle U3 und die vierte Umlenkstelle U4 sind in Längsrichtung L auf entgegengesetzten Seiten des Innenraums 14 angeordnet. Die dritte Umlenkstelle U3 befindet sich in Hochrichtung H unterhalb der ersten Umlenkstelle U1 und die vierte Umlenkstelle U4 befindet sich in Hochrichtung H unterhalb der zweiten Umlenkstelle U2. Dabei wird eine Führungsbahn P durch die vier Umlenkstellen U1 bis U4 definiert, die eine Führung der Abdeckeinheit 25 um den Innenraum 14 herum ermöglicht. Die Abdeckeinheit 25 grenzt lediglich im Bereich der Zugangsöffnung 15 unmittelbar an den Innenraum 14 an. Ansonsten befindet sie sich außerhalb mit Abstand zum Innenraum 14.

In Figur 3 ist schematisch nach Art eines Blockschaltbilds ein Ausführungsbeispiel für die Ausgestaltung der ersten Umlenkeinheit 45 bzw. der zweiten Umlenkeinheit 46 dargestellt. Die erste Umlenkeinheit 45 oder die zweite Umlenkeinheit 46 weist jeweils eine oder mehrere Umlenkrollen 49 auf, die um eine gemeinsame sich in Querrichtung Q erstreckende Achse drehbar gelagert sind. In Querrichtung Q können die Umlenkrollen 49 mit Abstand zueinander angeordnet sein. Anstelle von zwei oder mehr Umlenkrollen 49 kann auch eine durchgehende walzenförmige Umlenkrolle verwendet werden.

Wie es in Figur 3 veranschaulicht ist, werden die Lamellen 39 an der Umlenkstelle U1 bzw. U2 um einen Umfangsabschnitt der wenigstens einen Umlenkrolle 49 herumgeführt, so dass sie in etwa um 90° umgelenkt werden. Ein Führungselement 41 mit einer kreisbogenförmigen Führungsfläche 50 kann mit Abstand zu der wenigstens einen Umlenkrolle 49 angeordnet sein, so dass zwischen der Umfangsfläche der Umlenkrolle 49 und der Führungsfläche 50 eine kreisbogenförmig gekrümmte Führungsnut 40 gebildet ist, die Bestandteil der Führungseinrichtung 28 ist.

An diese kreisbogenförmige Führungsnut 40, die an der betreffenden Umlenkstelle U1, U2 angeordnet ist, kann sich eine in Längsrichtung L erstreckende Führungsnut 40 und/oder eine in Hochrichtung H erstreckende Führungsnut 40 anschließen, die vorzugsweise mit Abstand zu der kreisbogenförmigen Führungsnut 40 angeordnet sind. Sich geradlinig erstreckende Führungsnuten 40 können beispielsweise durch einen Zwischenraum zwischen zwei leistenförmigen Führungselementen 41 oder durch eine Nutvertiefung in einer Seitenwand 13 oder einem Führungselement 41 gebildet sein.

Die beiden Abdeckteile 35, 36 sind an ihren zweiten Längsenden 38 mittelbar über wenigstens ein flexibles Verbindungselement 55 mittelbar miteinander verbunden. Jedes flexible Verbindungselement 55 kann ein Seil, ein Riemen, ein Band, eine Kette oder dergleichen sein. Analog zu den Abdeckteilen 35, 36 ist das wenigstens eine Verbindungselement 55 derart ausgebildet, dass es um eine oder mehrere sich in Querrichtung Q erstreckende Achsen umgelenkt, gekrümmt oder gebogen werden kann.

Vorzugsweise sind zwei oder mehr Verbindungselemente 55 vorhanden, die sich durchgängig zwischen den beiden zweiten Längsenden 38 der Abdeckteile 35, 36 erstrecken. Bei einer Bewegung der Abdeckeinheit 25 bewegt sich auch das wenigstens eine Verbindungselement 55 entlang seiner jeweiligen Erstreckung.

Die Länge c der Abdeckteile 35, 36 ist vorzugsweise derart gewählt, dass die zweiten Längsenden 38 in jeder Position des Deckels 26 in Längsrichtung L stets außerhalb der Zugangsebene E angeordnet sind. Das Längsende 38 des ersten Abdeckteils 35 kann sich somit zwischen der ersten Umlenkstelle U1 und der dritten Umlenkstelle U3 oder unterhalb des Innenraums 14 befinden. Analog hierzu kann sich das zweite Längsende 38 des zweiten Abdeckteils 36 zwischen der zweiten Umlenkstelle U2 und der vierten Umlenkstelle U4 oder unterhalb des Innenraums 14 befinden.

Das wenigstens eine flexible Verbindungselement 55 erreicht beim Ausführungsbeispiel weder die erste Umlenkstelle U1, noch die zweite Umlenkstelle U2. Es wird entlang der Führungsbahn P an der dritten Umlenkstelle U3 und/oder der vierten Umlenkstelle U4 umgelenkt. Zu diesem Zweck kann die dritte Umlenkeinheit 47 bzw. die vierte Umlenkeinheit 48 zusätzlich zu wenigstens einer Umlenkrolle 49 für den zugeordneten Abdeckteil 35 bzw. 36 jeweils eine Führungsrolle 56 für jedes zugeordnete flexible Verbindungselement 55 aufweisen (Figur 4). Dabei kann das Verbindungselement 55 an der dritten Umlenkstelle U3 bzw. der vierten Umlenkstelle U4 mit Abstand zu den Lamellen 39 des betreffenden Abdeckteils 35 bzw. 36 geführt werden. Der Radius der Umfangsfläche der Führungsrolle 56 kann verschieden und insbesondere kleiner sein als der Radius der wenigstens einen Umlenkrolle 49, wie es schematisch in Figur 4 veranschaulicht ist. Um das flexible Verbindungselement 55 sicher an der Führungsrolle 56 zu führen, kann die Umfangsfläche der Führungsrolle 56 durch seitliche Erhöhungen oder Wangen begrenzt sein, so dass ein Abrutschen des Verbindungselements 55 von der Führungsrolle 56 vermieden ist.

Im Übrigen können die dritte Umlenkeinheit 47 und die vierte Umlenkeinheit 48 analog zur ersten Umlenkeinheit 45 bzw. zur zweiten Umlenkeinheit 46 ausgebildet sein, so dass auf die vorstehende Beschreibung - insbesondere in Verbindung mit Figur 3 - verwiesen werden kann.

An sämtlichen Umlenkstellen U1 bis U4 werden die Lamellen 39 der Abdeckteile 35, 36 nicht aufgerollt, sondern lediglich um einen gewünschten Winkel bogenförmig umgelenkt. Die Lamellen 39 werden an den Umlenkstellen U1 bis U4 nicht unmittelbar aufeinander abgelegt. Durch das Vermeiden des Ablegens von Lamellen 39 aufeinander und insbesondere des Aufrollens können Beschädigungen der Abdeckteile 35, 36 vermieden werden, die sich durch anhaftende Verschmutzungen ergeben könnten, insbesondere Schmutzpartikel (z.B. Materialpartikel des Werkstücks, die durch das Entgraten gelöst werden oder vom Werkstück entfernte andere Schmutzpartikel).

Bei dem bevorzugten Ausführungsbeispiel der Arbeitskammer 10 wird auf die Abdeckteile 35, 36 in deren Erstreckungsrichtung rechtwinklig zur Querrichtung Q eine Zugkraft F ausgeübt. Die Zugkraft F ist derart gerichtet, dass sie das zweite Längsende 38 vom ersten Längsende 37 weg zieht.

Die Zugkraft F kann auf unterschiedliche Arten erzeugt werden. Beispielsweise kann das wenigstens eine Verbindungselement 55 entlang seiner Erstreckung zwischen den beiden Abdeckteilen 35, 36 elastisch verformt sein und unter Zugspannung stehen und dadurch die Zugkraft F erzeugen.

Zusätzlich oder alternativ kann eine Spanneinrichtung 60 vorhanden sein, um die Zugkraft F zu bewirken. Die Spanneinrichtung 60 beaufschlagt hierfür vorzugsweise das wenigstens eine Verbindungselement 55, wie es schematisch in Figur 2 veranschaulicht ist. Ein Ausführungsbeispiel der Spanneinrichtung 60 ist in Figur 5 veranschaulicht.

Die Spanneinrichtung 60 weist in der Ausgestaltung gemäß Figur 5 wenigstens eine und beispielsgemäß zwei federbelastete Spannrollen 61 auf. Die Spannrollen 61 sind in Längsrichtung L bewegbar gelagert. Jede der Spannrollen 61 wird über eine Feder 62 in eine Spannrichtung R gedrängt. Das wenigstens eine Verbindungselement 55 ist um die Spannrolle 61 geführt und wird mittels der Spannrolle 61 durch die Federkraft der Feder 62 unter Zugspannung gesetzt. Die Spannrichtungen R der beiden Spannrollen 61 sind beispielsgemäß parallel zur Längsrichtung L orientiert und beim Ausführungsbeispiel aufeinander zu gerichtet. Es ist aber Auch möglich, die Spannrichtung R der wenigstens einen Spannrolle 61 schräg oder rechtwinkelig zur Längsrichtung L auszurichten.

Jeder Spannrolle 61 ist außerdem eine Zusatzrolle 63 zugeordnet. Die Zusatzrolle 63 befindet sich rechtwinklig zur Spannrichtung R neben der Spannrolle 61. Dadurch kann das Verbindungselement mäanderförmig bzw. S-förmig um die Spannrolle 61 und die Zusatzrolle 63 geführt werden. Die Zusatzrolle 63 ist in Spannrichtung R der zugeordneten Spannrolle 61 betrachtet in etwa auf Höhe der Spannrolle 61 oder versetzt hinter der Spannrolle 61 angeordnet, so dass die von der Feder 62 erzeugte Kraft eine ausreichend große Kraftkomponente in der Erstreckungsrichtung des Verbindungselements 55 auf das Verbindungselement 55 überträgt, um die Zugspannung zu erzeugen.

In Abwandlung zu dem in Figur 5 veranschaulichten Ausführungsbeispiel könnten die Spannrollen 61 und die Zusatzrollen 63 auch jeweils ihre Position tauschen, wobei dann die Spannrichtung R der jeweiligen Spannrolle 61 in Längsrichtung L voneinander weg gerichtet sind.

Die vorstehend beschriebene Anordnung des Deckels 26 mit den Abdeckteilen 35, 36 kann optional zusätzlich durch zwei weitere Abdeckteile ergänzt werden, die sich in Querrichtung Q auf entgegengesetzten Seiten an den Deckel 26 anschließen. Dadurch kann der Deckel 26 nicht nur in Längsrichtung L, sondern auch in Querrichtung Q in einem größeren Bereich bewegt werden. Es wird eine Art Kreuzschlittenanordnung gebildet.

Die vorstehend beschriebene Arbeitskammer 10 arbeitet in einer Fluidbearbeitungsmaschine wie folgt:

Zum Bearbeiten eines Werkstücks wird der Deckel 26 in die Offenstellung O bewegt, indem beispielsgemäß die Deckelteile 27 in Querrichtung Q voneinander weg bewegt werden. Die Zugangsöffnung 15 wird daher unterhalb des Deckels 26 zumindest teilweise frei und ein Werkstück 16 kann mittels der Werkstückhalterung 19 und beispielsgemäß der beiden Werkstückhaltearme 20 in den Innenraum 14 eingesetzt werden.

Nach dem Einbringen des Werkstücks 16 in den Innenraum 14 wird der Deckel 26 in die Schließstellung S bewegt. Die Werkstückhaltearme 20 ragen dabei durch die Eingriffsöffnungen 29 nach außen und halten das Werkstück 16 weiterhin im Innenraum 14.

Im Anschluss daran kann das Werkstück 16 mittels der Werkstückhalterung 19 und beispielsgemäß den Werkstückhaltearmen 20 im Innenraum 14 in einer gewünschten Position angeordnet und die Fluidbearbeitung mittels des Fluidwerkzeugs 18 gestartet werden. Während der Fluidbearbeitung kann das Werkstück 16 mittels der Werkstückhaltearme 20 relativ zum Fluidwerkzeug 18 bewegt werden. Bei einer Bewegung der Werkstückhaltearme 20 in Längsrichtung L wird der Deckel 26 ebenfalls in Längsrichtung L bewegt, insbesondere mithilfe der Werkstückhaltearme 20. Durch diese Bewegung des Deckels 26 wird die gesamte Abdeckeinheit 25 im Block bewegt. Der erste Abdeckteil 35 wird an der ersten Umlenkstelle U1 und der zweite Abdeckteil 36 an der zweiten Umlenkstelle U2 umgelenkt. Abhängig von der Position des Deckels 26 in Längsrichtung L kann der erste Abdeckteil 35 außerdem an der dritten Umlenkstelle U3 und/oder der zweite Abdeckteil 36 an der vierten Umlenkstelle U4 umgelenkt werden. Über die Spanneinrichtung 60 werden die Abdeckteile 35, 36 unter Zugspannung gehalten.

Wenn die Bearbeitung des Werkstücks 16 beendet ist, wird der Deckel von der Schließstellung S in die Offenstellung O gebracht, so dass das bearbeitete Werkstück 16 aus dem Innenraum 14 entnommen werden kann.

Die Erfindung betrifft eine Arbeitskammer 10 für eine Fluidbearbeitungsmaschine. Die Arbeitskammer hat einen Innenraum 14, der mittels einer Zugangsöffnung 15 zugänglich ist. Die Zugangsöffnung 15 wird zumindest während der Bearbeitung des Werkstücks 16 mittels einer Abdeckeinheit 25 aufweisend einen verschiebbaren Deckel 26 abgedeckt. An den Deckel schließen sich Abdeckteile 35, 36 an, die aus einer Zugangsebene E ausgelenkt werden können, in der sich die Zugangsöffnung 25 erstreckt. Beim Umlenken der Abdeckteile 35, 36 wird ein Aufwickeln der Abdeckteile 35, 36 vermieden.

### Bezugszeichenliste:

- 10: Arbeitskammer
- 11: Wand
- 12: Boden
- 13: Seitenwand
- 14: Innenraum
- 15: Zugangsöffnung
- 16: Werkstück
- 17: Halterung
- 18: Fluidwerkzeug
- 19: Werkstückhalterung
- 20: Werkstückhaltearm

- 25: Abdeckeinheit
- 26: Deckel
- 27: Deckelteil
- 28: Führungseinrichtung
- 29: Eingriffsöffnung
- 30: Faltenbalg

- 35: erster Abdeckteil
- 36: zweiter Abdeckteil
- 37: erstes Längsende der Abdeckteile
- 38: zweites Längsende der Abdeckteile
- 39: Lamelle
- 40: Führungsnut
- 41: Führungselement

- 45: erste Umlenkeinheit
- 46: zweiten Umlenkeinheit
- 47: dritte Umlenkeinheit
- 48: vierte Umlenkeinheit
- 49: Umlenkrolle
- 50: Führungsfläche

- 55: Verbindungselement
- 56: Führungsrolle

- 60: Spanneinrichtung
- 61: Spannrolle
- 62: Feder
- 63: Zusatzrolle

- a: Länge des Deckels
- b: Länge der Zugangsöffnung
- c: Länge des ersten und/oder zweiten Abdeckteils
- E: Zugangsebene
- F: Zugkraft
- H: Hochrichtung
- L: Längsrichtung
- O: Offenstellung
- P: Führungsbahn
- Q: Querrichtung
- R: Spannrichtung
- S: Schließstellung
- U1: erste Umlenkstelle
- U2: zweite Umlenkstelle
- U3: dritte Umlenkstelle
- U4: vierte Umlenkstelle

## Patentansprüche

1. Arbeitskammer (10) für eine Fluidbearbeitungsmaschine aufweisend:
- mehrere Wände (11), die einen Innenraum (14) der Arbeitskammer (10) umschließen,
- eine Zugangsöffnung (15) zum Innenraum (14) an einer Seite der Arbeitskammer (10), wobei sich die Zugangsöffnung (15) in einer Zugangsebene (E) erstreckt, die parallel zu einer Längsrichtung (L) und parallel zu einer Querrichtung (Q) ausgerichtet ist,
- eine relativ zu den Wänden (11) bewegbare Abdeckeinheit (25) für das Abdecken der Zugangsöffnung (15) während einer Werkstückbearbeitung im Innenraum (14),
- wobei die Abdeckeinheit (25) einen starren Deckel (26) aufweist, der die Zugangsöffnung (15) in einer Schließstellung (S) teilweise abdeckt und in Längsrichtung (L) bewegbar gelagert ist,
- wobei die Abdeckeinheit (25) einen ersten Abdeckteil (35) und einen zweiten Abdeckteil (36) aufweist, die sich entlang der Zugangsöffnung (15) erstrecken und in Längsrichtung (L) auf entgegengesetzten Seiten an den Deckel (26) anschließen,
- eine erste Umlenkeinheit (45) für das Umlenken des ersten Abdeckteils (35) ohne das erste Abdeckteil (35) aufzurollen und mit einer zweiten Umlenkeinheit (46) für das Umlenken des zweiten Abdeckteils (36) ohne das zweite Abdeckteil (36)aufzurollen,
**dadurch gekennzeichnet, dass**
- der erste Abdeckteil (35) und der zweite Abdeckteil (36) an ihren dem Deckel (26) entgegengesetzten Längsenden (38) mittels wenigstens einem flexiblen Verbindungselement (55) miteinander verbunden sind,
- und dass die Arbeitskammer (10) eine Spanneinrichtung (60) aufweist, die eine Zugkraft (F) auf die Abdeckteile (35, 36) ausübt, die jeweils vom Deckel (26) weg gerichtet ist, wobei die Spanneinrichtung (60) dazu eingerichtet ist, das wenigstens eine flexible Verbindungselement (55) unter einer Zugspannung zu halten.

2. Arbeitskammer nach Anspruch 1, wobei der Deckel (26) zwischen der die Zugangsöffnung (15) abdeckenden Schließstellung (S) und einer die Zugangsöffnung (15) zumindest teilweise freigebenden Offenstellung (O) bewegbar ist.

3. Arbeitskammer nach Anspruch 1 oder 2, wobei der Deckel (26) wenigstens eine Eingriffsöffnung (29) für einen Werkstückhaltearm (20) aufweist.

4. Arbeitskammer nach einem der vorhergehenden Ansprüche, wobei die Spanneinrichtung (60) wenigstens eine federkraftbelastete Spannrolle (61) aufweist, um die das wenigstens eine flexible Verbindungselement (55) geführt ist.

5. Arbeitskammer nach Anspruch 4, wobei für jedes vorhandene flexible Verbindungselement (55) jeweils wenigstens eine federkraftbelastete Spannrolle (61) vorhanden ist.

6. Arbeitskammer nach Anspruch 4 oder 5, wobei die Federkraft, die die Spannrolle (61) auf das zugeordnete Verbindungselement (55) überträgt, in Längsrichtung (L) ausgerichtet oder zumindest eine Kraftkomponente in Längsrichtung (L) hat, die größer ist als eine Kraftkomponente rechtwinkelig dazu.

7. Arbeitskammer nach einem der Ansprüche 4 bis 6, wobei jede Spannrolle (61) in Längsrichtung (L) bewegbar gelagert und mittels einer Feder (62) in eine Spannrichtung (R) gedrängt wird, wobei jeder Spannrolle (61) außerdem eine Zusatzrolle (63) zugeordnet ist, die sich rechtwinklig zur Spannrichtung (R) neben der zugeordneten Spannrolle (61) befindet und in Spannrichtung (R) der zugeordneten Spannrolle (61) betrachtet in etwa auf Höhe der Spannrolle (61) oder versetzt hinter der Spannrolle (61) angeordnet ist, und wobei das Verbindungselement S-förmig um die Spannrolle (61) und die Zusatzrolle (63) geführt ist.

8. Arbeitskammer nach einem der vorhergehenden Ansprüche, wobei die Abdeckeinheit (25) entlang einer Führungsbahn (P) bewegbar gelagert ist.

9. Arbeitskammer nach Anspruch 8, wobei die erste Umlenkeinheit (45) eine erste Umlenkstelle (U1) der Führungsbahn (P) bildet und wobei die zweite Umlenkeinheit (46) eine zweite Umlenkstelle (U2) der Führungsbahn (P) bildet.

10. Arbeitskammer nach Anspruch 9, wobei wenigstens eine weitere Umlenkeinheit (47, 48) eine weitere Umlenkstelle (U3, U4) der Führungsbahn (P) bildet.

11. Arbeitskammer nach Anspruch 9 oder 10, wobei eine dritte Umlenkeinheit (47) eine dritte Umlenkstelle (U3) der Führungsbahn (P) bildet und wobei eine vierte Umlenkeinheit (48) eine vierte Umlenkstelle (U4) der Führungsbahn (P) bildet.

12. Arbeitskammer nach einem der Ansprüche 9 bis 11, wobei jede Umlenkstelle (U1-U4) der Führungsbahn (P) eine Richtungsänderung der Führungsbahn (P) um eine sich in Querrichtung (Q) erstreckende Achse bewirkt.

13. Arbeitskammer nach einem der Ansprüche 8 bis 12, wobei die Führungsbahn (P) zumindest teilweise um den Innenraum (14) herum führt.

14. Arbeitskammer nach einem der Ansprüche 8 bis 13, wobei die die Abdeckeinheit (25) entlang der Führungsbahn (P) mittels einer Führungseinrichtung (28) geführt bewegbar gelagert ist.

## Claims

1. Working chamber (10) for a fluid processing machine comprising:
- multiple walls (11) that surround an interior (14) of the working chamber (10),
- an access opening (15) to the interior (14) on one side of the working chamber (10), wherein the access opening (15) extends in an access plane (E), which is orientated parallel to a longitudinal direction (L) and parallel to a transverse direction (Q),
- a cover unit (25) that is movable relative to the walls (11) and that is provided for covering the access opening (15) during a workpiece processing in the interior (14),
- wherein the cover unit (25) comprises a rigid cover (26) that partly covers the access opening (15) in a closing position (S) and is movably supported in longitudinal direction (L),
- wherein the cover unit (25) comprises a first cover part (35) and a second cover part (36) extending along the access opening (15) and adjoining the cover (26) on opposite sides in longitudinal direction,
- a first deflection unit (45) for deflection of the first cover part (35) without winding up the first cover part (35) and with a second deflection unit for deflecting the second cover part (36) without winding up the second cover part (36),
**characterized in that**
- the first cover part (35) and the second cover part (36) are connected with each other at their longitudinal ends (38) opposite to the cover (26) by means of at least one flexible connection element (55),
- and **in that** the working chamber (10) comprises a tensioning device (60) that applies a traction force (F) on the cover parts (35, 36) that is respectively directed away from the cover (26), wherein the tensioning device (60) is configured to keep the at least one flexible connection element (55) under tension.

2. Working chamber according to claim 1, wherein the cover (26) can be moved between the closing position (S) covering the access opening (15) and an open position (O) uncovering the access opening (15) at least partly.

3. Working chamber according to claim 1 or 2, wherein the cover (26) comprises at least one intrusion opening (29) for a workpiece holding arm (20).

4. Working chamber according to any of the preceding claims, wherein the tensioning device (60) comprises at least one tension roller (61), which is spring force loaded and around which the at least one flexible connection element (55) is guided.

5. Working chamber according to claim 4, wherein at least one spring force loaded tension roller (61) is provided for each present flexible connection element (55).

6. Working chamber according to claim 4 or 5, wherein the spring force that is transmitted from the tension roller (61) to the assigned connection element (55) is orientated in longitudinal direction (L) or has at least a force component in longitudinal direction (L) that is higher than a force component orthogonal thereto.

7. Working chamber according to one of the claims 4 to 6, wherein each tension roller (61) is moveably supported in longitudinal direction (L) and is urged in a tensioning direction (R) by means of a spring (62), wherein an auxiliary roller (63) is assigned to each tension roller (61), wherein the auxiliary roller (63) is located adjacent to the assigned tension roller (61) in direction orthogonal to the tensioning direction (R) and is arranged with view in tensioning direction (R) of the assigned tension roller (61) approximately on the level of the tension roller (61) or offset behind the tension roller (61), and wherein the connection element is guided in an S-shaped manner around the tension roller (61) and the auxiliary roller (63).

8. Working chamber according to any of the preceding claims, wherein the cover unit (25) is movably supported along a guide track (P).

9. Working chamber according to claim 8, wherein the first deflection unit (45) forms a first deflection position (U1) of the guide track (P) and wherein the second deflection unit (46) forms a second deflection position (U2) of the guide track (P).

10. Working chamber according to claim 9, wherein at least one additional deflection unit (47, 48) forms an additional deflection location (U3, U4) of the guide track (P).

11. Working chamber according to claim 9 or 10, wherein a third deflection unit (47) forms a third deflection position (U3) of the guide track (P) and wherein a fourth deflection unit (48) forms a fourth deflection position (U4) of the guide track (P).

12. Working chamber according to any of the claims 9 to 11, wherein each deflection position (U1 to U4) of the guide track (P) effects a direction change of the guide track (P) around an axis extending in transverse direction (Q).

13. Working chamber according to any of the claims 8 to 12, wherein the guide track (P) extends at least partly around the interior (14).

14. Working chamber according to any of the claims 8 to 13, wherein the cover unit (25) is movably supported in a guided manner along the guide track (P) by means of a guide device (28).

## Revendications

1. Chambre de travail (10) destinée à une machine-outil à fluide, comprenant :
- plusieurs parois (11) qui entourent un espace intérieur (14) de la chambre de travail (10),
- une ouverture d'accès (15) à l'espace intérieur (14), sur un côté de la chambre de travail (10), l'ouverture d'accès (15) s'étendant dans un plan d'accès (E) qui est orienté parallèlement à une direction longitudinale (L) et parallèlement à une direction transversale (Q),
- une unité de recouvrement (25) qui peut être déplacée par rapport aux parois (11) et est destinée à recouvrir l'ouverture d'accès (15) pendant l'usinage d'une pièce dans l'espace intérieur (14),
- l'unité de recouvrement (25) présentant un couvercle (26) rigide qui recouvre partiellement l'ouverture d'accès (15), dans une position de fermeture (S), et est disposé avec possibilité de déplacement dans la direction longitudinale (L),
- l'unité de recouvrement (25) présentant une première partie de recouvrement (35) et une deuxième partie de recouvrement (36), qui s'étendent le long de l'ouverture d'accès (15) et se raccordent au couvercle (26) sur des côtés opposés, dans la direction longitudinale (L),
- une première unité de déviation (45) pour dévier la première partie de recouvrement (35), sans enrouler la première partie de recouvrement (35), et comprenant une deuxième unité de déviation (46) pour dévier la deuxième partie de recouvrement (36), sans enrouler la deuxième partie de recouvrement (36),
**caractérisée en ce que**
- la première partie de recouvrement (35) et la deuxième partie de recouvrement (36) sont reliées l'une à l'autre à l'aide d'au moins un élément de liaison (55) souple, à leurs extrémités longitudinales (38) opposées au couvercle (26),
- et **en ce que** la chambre de travail (10) présente un dispositif de tension (60) qui exerce une force de traction (F) sur les parties de recouvrement (35, 36) qui est chaque fois orientée dans la direction opposée au couvercle (26), le dispositif de tension (60) étant conçu pour maintenir sous une contrainte de traction l'élément de liaison (55) souple, au nombre d'au moins un.

2. Chambre de travail selon la revendication 1, dans laquelle le couvercle (26) peut être déplacé entre la position de fermeture (S) recouvrant l'ouverture d'accès (15) et une position d'ouverture (O) dégageant au moins en partie l'ouverture d'accès (15).

3. Chambre de travail selon la revendication 1 ou 2, dans laquelle le couvercle (26) présente au moins une ouverture d'insertion (29) pour un bras de support de pièce (20).

4. Chambre de travail selon une des revendications précédentes, dans laquelle le dispositif de tension (60) présente au moins un galet de tension (61) qui est sollicité par la force d'un ressort et autour duquel est guidé l'élément de liaison (55) souple, au nombre d'au moins un.

5. Chambre de travail selon la revendication 4, dans laquelle il est prévu pour chaque élément de liaison (55) souple présent, respectivement au moins un galet de tension (61) sollicité par la force d'un ressort.

6. Chambre de travail selon la revendication 4 ou 5, dans laquelle la force de ressort, qui est transmise par le galet de tension (61) à l'élément de liaison (55) associé, est orientée dans la direction longitudinale (L) ou présente au moins une composante de force dans la direction longitudinale (L), qui est plus grande qu'une composante de force perpendiculaire à celle-ci.

7. Chambre de travail selon une des revendications 4 à 6, dans laquelle chaque galet de tension (61) est monté avec possibilité de déplacement dans la direction longitudinale (L) et est poussé dans une direction de tension (R) au moyen d'un ressort (62), sachant qu'est associé en outre à chaque galet de tension (61), un galet supplémentaire (63) qui est disposé à angle droit par rapport à la direction de tension (R), à côté du galet de tension (61) associé, et est placé à peu près au niveau du galet de tension (61) ou avec un décalage derrière le galet de tension (61), vu dans la direction de tension (R) du galet de tension (61) associé, et dans laquelle l'élément de liaison est guidé en forme de S autour du galet de tension (61) et du galet supplémentaire (63).

8. Chambre de travail selon une des revendications précédentes, dans laquelle l'unité de recouvrement (25) est montée avec possibilité de déplacement le long d'une glissière de guidage (P).

9. Chambre de travail selon la revendication 8, dans laquelle la première unité de déviation (45) constitue un premier point de déviation (U1) de la glissière de guidage (P), et dans laquelle la deuxième unité de déviation (46) constitue un deuxième point de déviation (U2) de la glissière de guidage (P).

10. Chambre de travail selon la revendication 9, dans laquelle au moins une unité de déviation (47, 48) supplémentaire constitue un point de déviation (U3, U4) supplémentaire de la glissière de guidage (P).

11. Chambre de travail selon la revendication 9 ou 10, dans laquelle une troisième unité de déviation (47) constitue un troisième point de déviation (U3) de la glissière de guidage (P), et dans laquelle une quatrième unité de déviation (48) constitue un quatrième point de déviation (U4) de la glissière de guidage (P).

12. Chambre de travail selon une des revendications 9 à 11, dans laquelle chaque point de déviation (U1-U4) de la glissière de guidage (P) provoque un changement de direction de la glissière de guidage (P) autour d'un axe s'étendant dans la direction transversale (Q).

13. Chambre de travail selon une des revendications 8 à 12, dans laquelle la glissière de guidage (P) passe au moins en partie autour de l'espace intérieur (14).

14. Chambre de travail selon une des revendications 8 à 13, dans laquelle l'unité de recouvrement (25) est montée avec possibilité de déplacement le long de la glissière de guidage (P) en étant guidée au moyen d'un dispositif de guidage (28).
